# EUROPEAN PATENT SPECIFICATION

(11) **EP 3 888 473 B1**
(45) Date of publication and mention of the grant of the patent: **21.01.2026**
(21) Application number: 18941210.9
(22) Date of filing: 30.11.2018
(51) Int. Cl.: A23L 7/157, A23L 5/10

(54) **USE OF PREGELATINIZED PHOSPHORIC ACID-CROSSLINKED STARCH AS BATTER FOR FRIED FOOD**
VERWENDUNG VON VORVERKLEISTERTER, MIT PHOSPHORSÄURE VERNETZTER STÄRKE IN TEIG FÜR FRITTIERTE LEBENSMITTEL
UTILISATION DE L'AMIDON PRÉGÉLATINISÉ RÉTICULÉ À L'ACIDE PHOSPHORIQUE COMME INGRÉDIENT DE PÂTE POUR ALIMENT FRIT

(43) Date of publication of application: 06.10.2021
(73) Proprietor: Nisshin Seifun Welna Inc., Tokyo 101-8441 (JP)
(72) Inventor: ITO, Takashi, Tokyo 103-8544 (JP); TSUJI, Akito, Tokyo 103-8544 (JP); TAKASU, Ryosuke, Tokyo 103-8544 (JP); ISHIKAWA, Yasuyoshi, Tokyo 103-8544 (JP); SHIGEMATSU, Toru, Tokyo 103-8544 (JP); HIWATASHI, Souichiro, Tokyo 103-8544 (JP)
(74) Representative: Wächtershäuser & Hartz Patentanwaltspartnerschaft mbB
(86) International application number: PCT/JP2018/044255
(87) International publication number: WO 2020/110308

(56) References cited:
- WO-A1-2017/188089
- WO-A1-2018/143215
- JP-A- 2003 079 334
- JP-A- 2005 000 081
- JP-A- 2009 072 128
- JP-A- 2012 235 752
- JP-A- 2016 165 250
- US-A1- 2006 045 956
- US-A1- 2006 045 956
- US-B1- 6 224 921
- OKUBO YOSHITAKA : "Processed starch to improve batter's physical properties and texture", A TECHNICAL JOURNAL ON FOOD CHEMISTRY & CHEMICALS, vol. 30, no. 9, 30 November 2013 (2013-11-30), JP, pages 34 - 37, XP009527784, ISSN: 0911-2286
- KOBAYASHI ISAO : "Properties and applications of distarch phosphate", A TECHNICAL JOURNAL ON FOOD CHEMISTRY & CHEMICALS, vol. 26, no. 2, 2010, JP, pages 33 - 36, XP009527785, ISSN: 0911-2286
- C PRIMO-MARTIN : "Cross-linking of wheat starch improves the crispness of deep-fried battered food", FOOD HYDROCOLLOIDS, vol. 28, no. 1, 6 December 2011 (2011-12-06), pages 53 - 58, XP028453964, ISSN: 0268-005X, DOI: 10.1016/j.foodhyd.2011.12.002
- OHKUMA KAZUHIRO : "Special feature", BULLETIN OF APPLIED GLYCOSCIENCE, vol. 1, no. 1, 20 January 2011 (2011-01-20), pages 34 - 38, XP055808870, ISSN: 2185-6427, DOI: 10.5458/bag.1.1_34

## Description

### Technical Field

The present invention relates to a use of a pregelatinized phosphoric acid-crosslinked starch as a batter for fried foods.

### Background Art

A fried food is usually produced by attaching a batter to surfaces of various food ingredients and deep-frying the food ingredients to which the batter is attached. A general batter for fried foods is roughly classified into a powdered batter (breader) and a liquid batter (batter liquid). The batter not only prevents oil absorption and moisture evaporation in a food ingredient covered with the batter during deep-frying but also imparts a favorable texture, flavor, and appearance to a fried food when the batter itself is cooked by deep-frying.

Meanwhile, coating may have a greasy and smeary texture, or a sticky or too hard texture, and such coating reduces favorability of texture of a fried food. For appearance of a fried food, desirably, coating on a surface is rough, mat and does not look greasy, and has irregularities like rocks. However, the coating having a greasy and smeary texture or a sticky texture as described above often also reduces favorability of the appearance of a fried food. The quality of texture and appearance of coating after deep-frying is not a little affected by a cooking operation, but also affected by the material and composition of a batter. Various types of batters have been conventionally provided in order to improve the texture and appearance of a fried food.

Patent Literature 1 describes that a deep-fried food having a good texture can be obtained with a deep-fry powder characterized by containing a powdered pregelatinized starch having a solubility of 30% or less and a swelling degree of 10% or more. Patent Literature 2 describes that a batter composition containing a gellan gum-containing pregelatinized starch obtained by pregelatinizing a gellan gum-containing starch and a fried food obtained by using the batter composition have crispness even after the batter composition and the fried food are reheated by a microwave oven. Patent Literature 3 describes that a deep-fried food having a rugged appearance, a floury appearance, and crispness can be obtained with a deep-fry powder containing a modified starch containing 0.01 to 2% by weight of a water-soluble component, having a polarized cross, and having a viscosity of a suspension having a concentration of 42% by weight of 25 to 500 mPa·s. Patent Literature 4 describes that a fried food having a good coating texture without deterioration of an appearance by bleeding of oil, even after the fried food is reheated by a microwave oven, can be obtained with a batter liquid for fried foods, the batter liquid containing a pregelatinized starch, a raw starch, edible oil and fat, and water and containing no wheat flour.

### Citation List

### Patent Literature

Patent Literature 1: JP H8-56599 A
Patent Literature 2: JP H9-201170 A
Patent Literature 3: JP 2009-296961 A
Patent Literature 4: JP 2000-333633 A
US 6 224 921 B1 discloses a batter for fried foods, the batter comprising a pregelatinized cross-linked (acetylated) starch.

### Summary of Invention

### Technical Problem

The present invention provides a use of a pregelatinized phosphoric acid-crosslinked starch as a batter for fried foods, to obtain a fried food having a favorable appearance and an improved coating texture

### Solution to Problem

By using a pregelatinized phosphoric acid-crosslinked starch having a predetermined property as a material of a batter for fried foods, the present inventors found that a fried food having a non-greasy appearance with floury coating is obtained and that the fried food has a light texture that is crispy and non-greasy.

Therefore, the present invention provides a use of a pregelatinized phosphoric acid-crosslinked starch as a batter for fried foods, wherein the pregelatinized phosphoric acid-crosslinked starch has the properties as defined in the appended claims.

### Advantageous Effects of Invention

A fried food obtained by using the batter for fried foods of the present invention has coating with a light texture that is crispy and non-greasy, also has floury coating that does not make a consumer feel that the coating is greasy, and also has an excellent appearance.

### Description of Embodiments

The present invention provides the use of a modified pregelatinized starch as a batter for fried foods. The modified pregelatinized starch used in the present invention is characterized by having a specific degree of pregelatinization and viscosity.

When starch is heated together with water, starch absorbs water and swells, and becomes water-soluble. The starch before being heated is called a raw starch, and the water-soluble starch is called a pregelatinized starch. The degree of gelatinization of starch is referred to as the degree of pregelatinization. The raw starch is water-insoluble. However, by pregelatinizing the raw starch as described above, making the raw starch coexist with an electrolyte, or hydrolyzing the raw starch, for example, starch particles swell, crystallinity is broken, or amylose is eluted, and the raw starch becomes water-soluble. A starch solution is viscous and used also as a food thickener. The viscosity of the starch solution usually increases as the degree of pregelatinization is increased, while the viscosity of the starch solution decreases, for example, by suppressing swelling of starch particles by crosslinking of amylose, or shortening the chain of amylose by hydrolyzing amylose.

The degree of pregelatinization of the modified pregelatinized starch used in the present invention is 65% or more, more preferably 70% or more, and still more preferably 75% or more. The degree of pregelatinization of the modified pregelatinized starch is preferably 95% or less. Here, the degree of gelatinization of starch refers to the degree of pregelatinization measured by a β-amylase/pullulanase (BAP) method (see Jap. Soc. Starch Sci, 28 (4): 235-240 (1981)). The viscosity of a solution of the modified pregelatinized starch is 500 mPa·s or less, and more preferably 350 mPa·s or less. Here, the viscosity of the starch solution refers to the viscosity of a starch solution containing starch and water (mass ratio 1 : 10) measured with a rotary viscometer under conditions of a product temperature of 25°C and 12 to 30 rpm. The property of starch reflected in the viscosity of the starch solution may be referred to as the "viscosity" of the starch. For example, by measuring the viscosity of a starch solution prepared using 100 parts by mass of the modified pregelatinized starch and 1000 parts by mass of water with a rotary viscometer under conditions of a product temperature of 25°C and 12 to 30 rpm, the viscosity of the solution of the modified pregelatinized starch is obtained, and represents the "viscosity" of the modified pregelatinized starch. Meanwhile, a lower limit of the viscosity of the solution of the modified pregelatinized starch only needs to be equal to or higher than a lower limit of a measurement limit of the rotary viscometer. This is because the rotary viscometer measures the viscosity based on resistance of a liquid, and in principle, cannot measure the viscosity of a liquid having almost no resistance. Therefore, the viscosity of the solution of the modified pregelatinized starch is preferably from the lower limit of the measurement limit of the rotary viscometer to 500 mPa·s, and more preferably from the lower limit of the measurement limit of the rotary viscometer to 350 mPa·s.

By containing the modified pregelatinized starch having the degree of pregelatinization and viscosity within the above ranges, a non-greasy appearance with floury coating and a light texture that is crispy are imparted to coating of a fried food. Meanwhile, such an improvement in the appearance of a fried food and the texture of coating cannot be achieved when the pregelatinized starch does not have the above-described degree of pregelatinization and viscosity. The modified pregelatinized starch used in the present invention has a higher viscosity than the raw starch and a lower viscosity than a general pregelatinized starch that is commercially available. It is considered that such properties contribute to the improvement in the appearance of a fried food and the texture of coating by the modified pregelatinized starch.

The modified pregelatinized starch can be prepared by preparing various starches by changing the type of starch as a raw material, a combination thereof, the type of starch processing method, a combination thereof, or the degree thereof, measuring the degree of pregelatinization and the viscosity of a starch solution by the procedure described above, and selecting one having a desired degree of pregelatinization and viscosity from among the various starches. Alternatively, a commercially available starch having a desired degree of pregelatinization and viscosity may be used in the present invention as the modified pregelatinized starch.

The modified pregelatinized starch is a pregelatinized crosslinked starch. By pregelatinizing and crosslinking starch, the above-described degree of pregelatinization and viscosity can be achieved at the same time. The pregelatinized crosslinked starch can be prepared by crosslinking a pregelatinized starch or pregelatinizing a crosslinked starch. Examples of crosslinking include phosphoric acid crosslinking and adipic acid crosslinking, and phosphoric acid crosslinking is used in the present invention. The pregelatinized phosphoric acid-crosslinked starch may be subjected to another type of processing as long as the pregelatinized phosphoric acid-crosslinked starch has the above-described degree of pregelatinization and viscosity. Examples of the other type of processing include oil and fat processing, etherification, esterification, oxidation, and a combination thereof. Preferably, the pregelatinized phosphoric acid-crosslinked starch has not been etherified or esterified, and more preferably, the pregelatinized phosphoric acid-crosslinked starch has not been subjected to any type of processing other than pregelatinization and crosslinking.

The type of starch used as a raw material of the modified pregelatinized starch is not particularly limited as long as starch can be used for food, and examples thereof include potato starch, tapioca starch, cornstarch, waxy cornstarch, rice starch, and wheat starch. Among these starches, above-ground starch derived from an above-ground part of a plant is preferable. Examples of the above-ground starch include rice starch, wheat starch, cornstarch, and waxy cornstarch. Out of these starches, wheat starch, cornstarch, and waxy cornstarch are preferable, and cornstarch is more preferable.

The modified pregelatinized starch contains a fraction with a size that does not pass through a sieve having an opening of 400 µm and passes through a sieve having an opening of 2000 µm in an amount of 50% by mass or more, more preferably in an amount of 60% by mass or more, still more preferably in an amount of 70% by mass or more, further still more preferably in an amount of 80% by mass or more in the total mass of the modified pregelatinized starch. By increasing the ratio of the above fraction having a specific size in the modified pregelatinized starch, the appearance of a fried food and the texture of coating can be further improved. Such a fraction can be prepared by sieving the modified pregelatinized starch using a sieve having an opening of 2000 µm and a sieve having an opening of 400 µm, and collecting a fraction that passes through a sieve having an opening of 2000 µm and does not pass through a sieve having an opening of 400 µm.

The above-described modified pregelatinized starch is used for producing a fried food as a batter. The modified pregelatinized starch is preferably provided in a form of powder and can be applied to an ingredient or can be blended with another batter component.

Therefore, a batter for fried foods, the batter containing the modified pregelatinized phosphoric acid-crosslinked starch is also disclosed herein. By blending the modified pregelatinized starch with another batter component, if necessary, the batter for fried foods is produced. The content of the modified pregelatinized starch in the batter is preferably 5 to 100% by mass, more preferably 10 to 90% by mass, and still more preferably 15 to 70% by mass in the total mass of the batter. When the content of the modified pregelatinized starch in the batter is less than 5% by mass, an effect of improving the appearance of a fried food and the texture of coating is reduced.

The modified pregelatinized starch in the batter contains a fraction with a size that does not pass through a sieve having an opening of 400 µm and passes through a sieve having an opening of 2000 µm in an amount of 50% by mass or more, more preferably in an amount of 60% by mass or more, still more preferably in an amount of 70% by mass or more, further still more preferably in an amount of 80% by mass or more in the total amount of the modified pregelatinized starch from a viewpoint of further improving the appearance of a fried food and the texture of coating. For example, when the batter contains the modified pregelatinized starch in an amount of 15 to 70% by mass, the content of the fraction with a size that does not pass through a sieve having an opening of 400 µm and passes through a sieve having an opening of 2000 µm in the batter can be preferably 7.5 to 70% by mass, more preferably 9 to 70% by mass, still more preferably 10.5 to 70% by mass, and further still more preferably 12 to 70% by mass in the total mass of the batter. Alternatively, in another example, the content of the fraction may be 25 to 70% by mass, 30 to 70% by mass, or 30 to 50% by mass in the total mass of the batter.

The batter may be a composition containing a component other than the above-described modified pregelatinized starch. Examples of the other component include: cereal flour such as wheat flour or rice flour; starch other than the modified pregelatinized starch or processed starch; egg flour such as whole egg flour or egg white flour; a thickener; a swelling agent; a seasoning such as common salt, powdered soy sauce, a fermented seasoning, powdered soybean paste, or an amino acid; a spice; a fragrance; a nutritional component such as vitamin or mineral; a coloring agent; powdered oil and fat; and salts. These other components can be used singly or in combination of two or more types thereof depending on desired characteristics of a fried food. The total content of these other components is preferably 95% by mass or less, more preferably 90% by mass or less, and still more preferably 85% by mass or less in the total mass of the batter.

The type of fried food produced using the batter is not particularly limited, and examples thereof include a deep-fried food, fried chicken, and a fried food with bread crumbs such as a cutlet. An ingredient of a fried food is not particularly limited, and examples thereof include livestock meat such as chicken, pork, beef, mutton, or goat meat; seafood; and vegetables. A food ingredient to which the batter is applied is preferably meat or seafood. The food ingredient may be seasoned before the batter is applied thereto. A method for seasoning the ingredient is not particularly limited, and a known method can be used. For example, the food ingredient may be soaked in a powder or a liquid containing seasonings, herbs, spices, sugars, amino acids, thickening polysaccharides, enzymes, and the like.

In producing a fried food using the batter, typically, the batter is attached to a food ingredient, and the food ingredient to which the batter is attached is deep-fried. A method for attaching the batter to a food ingredient is not particularly limited. The powdered batter may be attached tc a food ingredient, or a batter liquid containing the batter may be attached to a food ingredient. Depending on the type of fried food to be produced, before the batter is attached to a food ingredient, for example, cereal flour, starch, an egg liquid, or a batter liquid not containing the batter described herein may be attached to the food ingredient. When a fried food with bread crumbs is produced, bread crumbs may be attached to a food ingredient to which an egg liquid or a batter liquid are attached together with the batter described herein. It is preferable to attach the powdered batter to a food ingredient from a viewpoint of forming coating having a floury appearance on a produced fried food. In addition, it is preferable not to attach another batter to the same layer as the batter or an upper layer thereof from a viewpoint of forming coating having the floury appearance.

Preferably, the powdered batter disclosed herein is sprinkled on a food ingredient and attached thereto. Examples of a method for the "sprinkling" include a general sprinkling operation, for example, 1) an operation of sprinkling the batter from above a food ingredient, 2) an operation of putting the batter and a food ingredient into a bag, and shaking the bag with an opening of the bag closed, or 3) an operation of laying the batter in a relatively wide container such as a plate, and rolling a food ingredient on the batter. Meanwhile, examples of a method for attaching a batter liquid containing the batter disclosed herein to a food ingredient include immersing the food ingredient in the batter liquid and spraying the batter liquid onto the food ingredient.

A food ingredient to which the batter is attached can be deep-fried according to a usual method. For example, heating temperature (oil temperature) and heating time for deep-frying only need to be appropriately set according to the type and size of a food ingredient.

### Examples

Hereinafter, the present invention will be described in more detail with reference to Examples. However, the present invention is not limited to the following Examples.

### Test Example 1

### (Preparation of pregelatinized starch)

To 100 parts by mass of each of the various raw material starches illustrated in Table 1, 100 to 400 parts by mass of water was added to prepare a slurry-like starch solution. This solution was spread on a drum dryer heated to 130 to 170°C so as to form a thin film, heated and dried while the drum was rotated, and then crushed to prepare each of Nos. 1 to 4 pregelatinized starches illustrated in Table 1. The degree of pregelatinization of each of the obtained pregelatinized starches was measured by a BAP method. In addition, 1000 parts by mass of water was added to 100 parts by mass of each of the pregelatinized starches to prepare a starch solution, and the viscosity of the starch solution was measured with a rotary viscometer under conditions of a product temperature of 25°C and 12 to 30 rpm. Note that the degree of pregelatinization and viscosity of each of an unprocessed cornstarch and a phosphoric acid-crosslinked cornstarch, which are raw materials of Nos. 1 and 2 pregelatinized starches, respectively, were measured by a similar procedure. The degree of pregelatinization was 3% for the unprocessed cornstarch and 2% for the phosphoric acid-crosslinked cornstarch. The viscosity could not be measured because both starches were precipitated and the viscosity for each of the starches was very low.

**[Table 1]**

| No. | Pregelatinized starch | Raw material starch | Degree of pregelatinization^{*1} | Viscosity^{* 2} |
|---|---|---|---|---|
| 1 | Pregelatinized phosphoric acid-crosslinked cornstarch | Phosphoric acid-crosslinked cornstarch | 75 | 300 |
| 2 | Pregelatinized cornstarch | Cornstarch | 78 | 8000 |
| 3 | Pregelatinized acetylated phosphoric acid-crosslinked potato starch | Acetylated phosphoric acid-crosslinked potato starch | 66 | 21000 |
| 4 | Pregelatinized hydroxypropylated wheat starch | Hydroxypropylated wheat starch | 80 | 32600 |

| | | | | |
|---|---|---|---|---|
| *1: β-amylase/pullulanase (BAP) method *2: Viscosity measured with B-type viscometer (product temperature: 25°C, 12 to 30 rpm, starch solution having a ratio of starch : water = 1 : 10) | | | | |

### (Preparation of batter)

50% by mass of the prepared pregelatinized starch and 50% by mass of commercially available wheat flour (soft wheat flour) were mixed to prepare batters for fried foods of Production Example 1 and Comparative Examples 1 to 3 as illustrated in Table 2. As Reference Example 1, a batter containing the raw material starch of No. 1 pregelatinized starch and wheat flour was prepared, and as Reference Example 2, a batter containing the raw material starch of No. 2 pregelatinized starch and wheat flour was prepared. As Reference example 3, a batter containing wheat flour was prepared.

### (Production of fried food)

Chicken thigh was cut into pieces each having 25 g and seasoned to prepare a food ingredient. The batter prepared above was sprinkled on this food ingredient and attached thereto. The food ingredient with the batter was deep-fried with salad oil heated to 175°C for four minutes to produce deep-fried chicken. The produced fried food was evaluated for appearance and texture of coating after rough heat was removed from the fried food. In the evaluation, 10 specialized panelists scored the appearance of the fried food and the texture of the coating according to the following evaluation criteria, and an average of the scores of the 10 panelists was calculated. The evaluation results are illustrated in Table 2.

### Evaluation criteria

### (Appearance)

5: The surface is dry, and flouriness is observed. Very good.
4: There is a part moistened with oil on the surface, however flouriness is observed. Good.
3: The whole is moistened with oil, and flouriness is slightly observed.
2: Oil floating is partially observed, and flouriness is not observed so much. Poor.
1: Oil floating is observed overall, and flouriness is not observed. Very poor.

### (Texture of coating)

5: Very good because the coating is very light and crispy, and does not make a consumer feel at all that the coating is greasy.
4: Good because the coating is light and crispy, and does not make a consumer feel that the coating is greasy.
3: The coating is slightly crispy, and makes a consumer slightly feel that the coating is greasy.
2: Poor because the coating has no crispness, is slightly hard or slightly sticky, and makes a consumer feel that the coating is greasy.
1: Very poor because the coating has no crispness, is hard or sticky, and makes a consumer strongly feel that the coating is greasy.

**[Table 2]**

| Composition of batter (% by mass) | | Production Example | Comparative Example | | | Reference Example | | |
|---|---|---|---|---|---|---|---|---|
| | | 1 | 1 | 2 | 3 | 1 | 2 | 3 |
| Pregelatinized starch | | | | | | | | |
| | No.1 | 50 | | | | | | |
| | No.2 | | 50 | | | | | |
| | No.3 | | | 50 | | | | |
| | No.4 | | | | 50 | | | |
| Phosphoric acid-crosslinked cornstarch | | | | | | 50 | | |
| Cornstarch | | | | | | | 50 | |
| Wheat flour | | 50 | 50 | 50 | 50 | 50 | 50 | 100 |
| Total | | 100 | 100 | 100 | 100 | 100 | 100 | 100 |
| Appearance | | 4.5 | 2.1 | 1.9 | 1.9 | 2.0 | 1.9 | 2.2 |
| Texture of coating | | 4.3 | 2. 4 | 2.5 | 2.2 | 1.9 | 2.1 | 2.6 |

### Test Example 2

No. 1 pregelatinized starch prepared in Test Example 1 and wheat flour were blended at the compositions illustrated in Table 3 to prepare batters for fried foods. Using the obtained batters, deep-fried chicken was produced by a similar procedure to Test Example 1 and evaluated. The evaluation results are illustrated in Table 3 together with the results of Production Example 1.

**[Table 3]**

| Composition of batter (% by mass) | Production Example | | | | | | | |
|---|---|---|---|---|---|---|---|---|
| | 2 | 3 | 4 | 5 | 1 | 6 | 7 | 8 |
| No.1 Pregelatinized starch | 3 | 5 | 10 | 15 | 50 | 70 | 90 | 100 |
| Wheat flour | 97 | 95 | 90 | 85 | 50 | 30 | 10 | - |
| Total | 100 | 100 | 100 | 100 | 100 | 100 | 100 | 100 |
| Appearance | 3.5 | 3.8 | 4.0 | 4.2 | 4.5 | 4.4 | 4.1 | 3.9 |
| Texture of coating | 3.4 | 3.8 | 3.9 | 4.2 | 4.3 | 4.2 | 4.0 | 3.7 |

### Test Example 3

From No. 1 pregelatinized starch prepared in Test Example 1, a fraction having a size that passes through a sieve having an opening of 2000 µm and does not pass through a sieve having an opening of 400 µm (fraction A) and a fraction that passes through a sieve having an opening of 400 µm (fraction B) were collected. The obtained fractions were mixed at the ratios illustrated in Table 4 to prepare batters for fried foods. Using the obtained batters, deep-fried chicken was produced by a similar procedure to Test Example 1 and evaluated.

**[Table 4]**

| Composition of batter (% by mass) | Production Example | | | |
|---|---|---|---|---|
| | 9 | 10 | 11 | 12 |
| Pregelatinized starch (fraction A + fraction B) | 50 | 50 | 50 | 50 |
| (Content of fraction A in pregelatinized starch, % by mass) | (50) | (60) | (70) | (80) |
| Wheat flour | 50 | 50 | 50 | 50 |
| Total | 100 | 100 | 100 | 100 |
| Appearance | 4.7 | 4.8 | 4.9 | 4.9 |
| Texture of coating | 4.5 | 4.5 | 4.6 | 4.7 |

## Claims

1. Use of a pregelatinized phosphoric acid-crosslinked starch as a batter for fried foods, wherein
the pregelatinized phosphoric acid-crosslinked starch has a degree of pregelatinization of 65% or more, which is determined by a β-amylase/pullulanase (BAP) method, and
a starch solution containing the pregelatinized phosphoric acid-crosslinked starch and water at a mass ratio of 1 : 10 has a viscosity of 500 mPa·s or less, which is measured with a rotary viscometer under conditions of a product temperature of 25°C and 12 to 30 rpm, wherein the pregelatinized phosphoric acid-crosslinked starch contains a fraction that does not pass through a sieve having an opening of 400 µm and passes through a sieve having an opening of 2000 µm in an amount of 50% by mass or more in the total mass of the pregelatinized phosphoric acid-crosslinked starch.

2. The use according to claim 1, wherein the batter comprising 5 to 100% by mass of the pregelatinized phosphoric acid-crosslinked starch.

3. The use according to any one of claims 1 or 2, wherein the starch is an above-ground starch, namely rice starch, wheat starch, cornstarch, or waxy cornstarch.

4. The use according to any one of claims 1 to 3, wherein the batter is in a powder form.

## Patentansprüche

1. Verwendung einer vorverkleisterten, phosphorsäurevernetzten Stärke als Panade für frittierte Lebensmittel, wobei
die vorverkleisterte, phosphorsäurevernetzte Stärke einen Vorverkleisterungsgrad von mindestens 65 % aufweist, der mittels einer β-Amylase/Pullulanase (BAP)-Methode bestimmt wird, und
eine Stärkelösung, die die vorverkleisterte, phosphorsäurevernetzte Stärke und Wasser im Massenverhältnis 1:10 enthält, eine Viskosität von maximal 500 mPa·s aufweist, die mit einem Rotationsviskosimeter bei einer Produkttemperatur von 25 °C und einer Drehzahl von 12 bis 30 U/min gemessen wird, wobei die vorverkleisterte, phosphorsäurevernetzte Stärke eine Fraktion enthält, die ein Sieb mit einer Maschenweite von 400 µm nicht passiert und ein Sieb mit einer Maschenweite von 2000 µm in einer Menge von mindestens 50 Masseprozent der Gesamtmasse passiert. Vorgelatinierte, mit Phosphorsäure vernetzte Stärke.

2. Verwendung nach Anspruch 1, wobei der Teig 5 bis 100 Masseprozent der vorgelatinierten, mit Phosphorsäure vernetzten Stärke enthält.

3. Verwendung nach einem der Ansprüche 1 oder 2, wobei es sich bei der Stärke um oberirdisch geerntete Stärke handelt, nämlich Reisstärke, Weizenstärke, Maisstärke oder Wachsmaisstärke.

4. Verwendung nach einem der Ansprüche 1 bis 3, wobei der Teig in Pulverform vorliegt.

## Revendications

1. Utilisation d'un amidon réticulé à l'acide phosphorique prégélatinisé comme pâte pour aliments frits, dans laquelle l'amidon réticulé à l'acide phosphorique prégélatinisé présente un degré de prégélatinisation de 65 % ou plus, qui est déterminé par une méthode β-amylase/pullulanase (BAP), et une solution d'amidon contenant l'amidon réticulé à l'acide phosphorique prégélatinisé et de l'eau à un rapport massique de 1: 10 présente une viscosité de 500 mPa·s ou moins, qui est mesurée avec un viscosimètre rotatif dans des conditions de température de produit de 25 °C et de 12 à 30 tr/min, dans laquelle l'amidon réticulé à l'acide phosphorique prégélatinisé contient une fraction qui ne passe pas à travers un tamis présentant une ouverture de 400 µm et passe à travers un tamis présentant une ouverture de 2000 µm en une quantité de 50 % en masse ou plus dans la masse totale de l'amidon réticulé à l'acide phosphorique prégélatinisé.

2. Utilisation selon la revendication 1, dans laquelle la pâte comprend de 5 à 100 % en masse de l'amidon réticulé à l'acide phosphorique prégélatinisé.

3. Utilisation selon l'une des revendications 1 ou 2, dans laquelle l'amidon est un amidon de plantes au-dessus du sol, à savoir l'amidon de riz, l'amidon de blé, l'amidon de maïs ou l'amidon de maïs cireux.

4. Utilisation selon l'une des revendications 1 à 3, dans laquelle la pâte est sous forme de poudre.
